# EUROPEAN PATENT APPLICATION

(11) **EP 3 669 629 A1**
(43) Date of publication of application: **24.06.2020**
(21) Application number: 18845761.8
(22) Date of filing: 17.08.2018
(51) Int. Cl.: A01D 34/84

(54) **SMART MOWER**

(30) Priority: 18.08.2017 CN 201721042619 U; 18.08.2017 CN 201721040002 U
(71) Applicant: Suzhou Cleva Precision Machinery & Technology Co., Ltd., Suzhou, Jiangsu 215000 (CN)
(72) Inventor: KONG, Zhao, Suzhou Jiangsu 215000 (CN); HAN, Kui, Suzhou Jiangsu 215000 (CN)
(74) Representative: Stuttard, Garry Philip
(86) International application number: PCT/CN2018/101042
(87) International publication number: WO 2019/034144

(57) **Abstract**

A smart mower. The smart mower comprises a housing, a cutting mechanism, and a walking mechanism. The housing comprises an inner housing located in the lower part and an outer housing connected to the inner housing and located in the upper part. The cutting mechanism and the walking mechanism are mounted in the inner housing. A handle used for conveying the smart mower is disposed on the inner housing. The handle is disposed adjacent to the outer housing, and a projection of the handle in a horizontal surface falls within the range of a projection of the outer housing in a horizontal surface. The smart mower can be conveniently conveyed and is safer.

## Description

### TECHNICAL FIELD

The present invention relates to a garden tool, in particular to a smart mower.

### BACKGROUND

Generally, when conveying a smart mower, it is necessary to hold the bottom shell, which is very inconvenient to carry. And the blade under the bottom housing is easy to scratch hands of people and is very unsafe.

In addition, the robot mower is a smart device, and generally the machine body of the robot mower is provided with a USB data interface for the convenience of upgrading; because the mower is an outdoor equipment, it is easy for water to enter the USB data interface, and in order to avoid the damage of the internal circuit of the machine caused by water entering, at present, the waterproof silicone plug is generally adopted to carry out waterproof treatment on the USB data interface. But the waterproof silicone plug is easy to lose, inconvenient to operate, and poor in the waterproof reliability.

### SUMMARY

### Technical solution

The object of the present invention is to provide a smart mower which is convenient to carry and safer.

In order to achieve one of the above objects, an embodiment of the present invention provides a smart mower, which includes a housing, a cutting mechanism and a walking mechanism, the housing includes an inner housing located at the lower portion and an outer housing connected with the inner housing and located at the upper portion, and the cutting mechanism and the walking mechanism are mounted in the inner housing, the inner housing is provided with a handle for conveying the smart mower, the handle is disposed adjacent to the outer housing, and the projection of the handle on the horizontal plane is located within the range of the projection of the outer housing on the horizontal plane.

As a further improvement of the embodiment of the present invention, the outer housing and the inner housing are flexibly connected.

As a further improvement of one embodiment of the present invention, the housing is provided with a collision sensing device; when the outer housing is collided, the collision sensing device can be triggered to carry out preset operation.

As a further improvement of the embodiment of the present invention, the minimum distance between the handle and the outer housing is not more than 6 mm.

As a further improvement of the embodiment of the present invention, the projection of the handle on the horizontal plane is at least partially outside the range of the projection of the inner housing on the horizontal plane.

As a further improvement of the embodiment of the present invention, the handle and the inner housing are integrally formed.

As a further refinement of an embodiment of the present invention, the handle extends in a ring shape, and both ends of the handle are connected to the inner housing.

As a further improvement of the embodiment of the invention, two handles are provided, and respectively disposed on two opposite sides of the inner housing.

As a further improvement of the embodiment of the present invention, the walking mechanism includes a first and a second road wheels rotatably disposed on a first side of the housing, and a third and a fourth road wheels disposed on a second side of the housing, with one handle on the first side of the housing and the other handle on the second side of the housing.

As a further refinement of an embodiment of the present invention, one handle is located between the first and the second road wheels, another handle is located between the third and the fourth road wheels, and the directions in which the two handle extend lengthwise are both perpendicular to the axis of the first road wheel.

Compared with the prior art, the beneficial effect of the present invention is that by providing a handle for conveying the smart mower on the inner housing, when needing to convey the smart mower, the smart mover can be conveyed by holding the handle with hands, therefore it is more convenient to carry. And the handle is arranged on the inner housing, and the handle is adjacent to the outer housing, so that the blade cannot be touched when the smart mower is conveyed, and the smart mower is safer when being conveyed.

Another object of the invention is to provide a self-walking apparatus that is more reliable in waterproofing.

To achieve the above object, the present invention provides a self-walking apparatus comprising: a machine body, the machine body is provided with an accommodating cavity and an electric connection socket close to the accommodating cavity, the machine body is provided with a movable cover, the movable cover comprises an upper cover plate and a rib plate which is fixed at one end of the upper cover plate and extends towards the direction close to the accommodating cavity, the movable cover can pivot around a connecting portion of the upper cover plate and the rib plate, and with the pivoting of the movable cover, the rib plate opens or closes the electric connection socket while the upper cover plate opens or closes the accommodating cavity.

As a further improvement of the embodiment of the present invention, the self-walking apparatus further includes a battery module for supplying power to the cutting mechanism, the walking mechanism, and the control module, and the battery module is mounted in the accommodating cavity.

As a further improvement of the embodiment of the present invention, the movable cover further includes a side cover plate fixed to the other end of the upper cover plate and extending towards a direction close to the accommodating cavity, and the side cover plate and the upper cover plate open or close the accommodating cavity together.

As a further improvement of the embodiment of the present invention, in the walking direction of the self-walking apparatus, the side cover plate is provided on a rear side of the machine body.

As a further improvement of the embodiment of the present invention, the rib plate is disposed perpendicularly to the upper cover plate.

As a further improvement of the embodiment of the present invention, the inclination angle between the rib plate and the direction perpendicular to the upper cover plate is less than 30 degrees.

As a further improvement of the embodiment of the invention, a waterproof material is provided around the electric connection socket, and the rib plate is abutted against the waterproof material to close the electric connection socket.

As a further improvement of the embodiment of the present invention, the waterproof material includes foam, and the foam is adhered to the periphery of the electric connection socket.

As a further improvement of an embodiment of the present invention, one of the movable cover and the electric connection socket is provided with a waterproof material, the movable cover is in a closed position, and the waterproof material surrounds the electric connection socket by a circle.

As a further improvement of an embodiment of the present invention, the walking mechanism includes at least one road wheel, and the pivot axis of the movable cover is parallel to the rotation axis of the road wheel.

As a further improvement of the embodiment of the present invention, the self-walking apparatus further includes a cutting mechanism connected to the machine body, a walking mechanism, and a control module for coordinating the cutting mechanism and the walking mechanism, and the electric connection socket includes a data interface connected to the control module.

Compared with the prior art, the beneficial effect of the present invention is that the self-walking apparatus according to the present invention opens and closes the electric connection socket while opening and closing the accommodating cavity by means of the movable cover, so that water is prevented from entering the electric connection socket during use, and the self-walking apparatus is simple in structure and reliable in waterproofing.

### BRIEF DESCRIPTION OF THE DRAWINGS

Fig. 1 is a transverse sectional view of a smart mower according to the first embodiment of the present invention.
Fig. 2 is a top view of the smart mower according to the first embodiment of the present invention with the housing removed.
Fig. 3 is a bottom view of the smart mower according to the first embodiment of the present invention with the housing removed.
Fig. 4 is a schematic sectional view of a robotic mower having a waterproof structure according to the second embodiment of the present invention, with a movable cover in a closed position.
Fig. 4a is a detailed view of the part P1 in Fig. 4.
Fig. 5 is similar to Fig. 4 with the movable cover in the open position.
Fig. 5a is a detailed view of the part P2 in Fig. 5.
Fig. 6 is a schematic view of another structure of the movable cover of the robotic mower in Fig. 4.
Fig. 7 is a schematic view of still another structure of the movable cover of the robotic mower in Fig. 4.

### DETAILED DESCRIPTION OF THE INVENTION

The invention will be described in detail below with reference to specific embodiments shown in the accompanying drawings. These embodiments are not intended to limit the present invention, and structural, methodological, or functional changes made by a person skilled in the art based on these embodiments are intended to be included within the scope of the present invention.

In the various figures of the present application, certain dimensions of structures or portions may be exaggerated relative to other structures or portions for convenience of illustration, and thus, the figures are used only to illustrate the basic structure of the subject matter of the present application.

In addition, terms such as "upper", "above", "lower", "below" and the like, used herein to indicate a spatially relative position are used for the ease of explanation to describe the relationship of one unit or feature with respect to another unit or feature as illustrated in the figures. Terms of the spatially relative position may be intended to encompass different orientations of the device in use or operation in addition to the orientation depicted in the figures. For example, if the device in the figures is turned over, units described as "below" or "beneath" other units or features would then be oriented "above" the other units or features. Thus, the exemplary term "below" may encompass both an orientation of above and below. The device may be otherwise oriented (rotated 90 degrees or other orientations) and the spatially relative descriptors used herein are interpreted accordingly.

### Embodiment 1

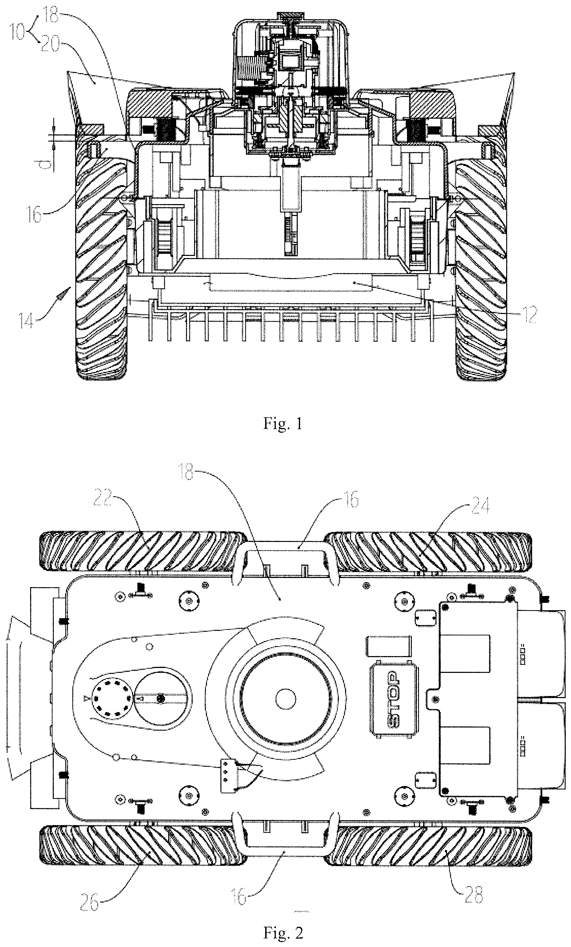

As shown in Figs. 1, 2 and 3, the present embodiment discloses a smart mower, which includes a housing 10, a cutting mechanism 12 and a walking mechanism 14, wherein the housing 10 is provided with a handle 16 for conveying the smart mower, and the projection of the handle 16 on the horizontal plane is located within the range of the projection the housing 10 on the horizontal plane, that is, the outermost side of the housing 10 protrudes from the handle 16. The horizontal plane herein refers to a corresponding horizontal plane when the smart mower is in a working state, i.e., when the walking mechanism 14 is supported on the ground, wherein the cutting mechanism 12 comprises a cutting blade or a grass mowing line.

In the present preferred embodiment, the housing 10 is provided with the handle 16 for conveying the smart mower. When the smart mower needs to be conveyed, it is more convenient to convey it by holding the handle 16 by hands. And the outermost side of the housing 10 is provided to protrude from the outermost side of the handle 16, so that the handle 16 is prevented from being collided, thereby protecting the handle 16.

Further, the housing 10 includes an inner housing 18 located at the lower portion and an outer housing 20 connected with the inner housing 18 and located at the upper portion, wherein the inner housing 18 is used for mounting the cutting mechanism 12 and the walking mechanism 14, and the outer housing 20 is used for covering the inner housing 18 from above. Specifically, the handle 16 is disposed at the inner housing 18 and adjacent to the outer housing 20. That is, the handle 16 is disposed at the side of the inner housing 18 which is adjacent to the outer housing 20, so that the blade is not touched when the smart mower is conveyed, thereby making the smart mower safer to convey. Specifically, the handle 16 and the inner housing 18 are integrally formed, and certainly the handle 16 and the inner housing 18 may also be detachably and separately arranged and are connected together by a screw or other fixed connection methods.

Specifically, the handle 16 is of a hollow structure, and the cross-sectional shape of the handle 16 is substantially square, circular, oval, or other shape. The handle 16 extends in a ring shape, both ends thereof are connected to the inner housing 18, and the middle portion of the handle 16 is spaced at a certain distance from the inner housing 18. It is of course also possible to connect only one end of the handle 16 to the inner housing 18, and the other end of the handle 16 being the free end remote from the inner housing 18.

Alternatively, the handle 16 may be provided in other forms, such as being connected to the inner housing 18 along its entire extension direction. Further, the handle 16 has a first portion extending outwardly from the inner housing 18 and a second portion extending obliquely downward from the first portion, and the first portion, the second portion and the inner housing 18 define a recess for receiving fingers of an operator, so that when conveying the smart mower, the operator can insert his/her hand into the recess from below and hold the handle to convey the smart mower.

The projection of the handle 16 on the horizontal plane is within the range of the projection of the outer housing 20 on the horizontal plane, and the projection of the handle 16 on the horizontal plane is at least partially outside the range of the projection of the inner housing 18 on the horizontal plane. That is, the outermost side of the outer housing 20 protrudes from the outermost side of the handle 16, and the outermost side of the handle 16 protrudes from the inner housing 18. Therefore, not only the handle 16 is protected from being collided, but also a user can conveniently hold the handle 16 to convey the smart mower.

In the present embodiment, the outer housing 20 and the inner housing 18 are flexibly connected. Specifically, the outer housing 20 and the inner housing 18 are connected through an elastic member, and when the outer housing 20 collides with an obstacle, the outer housing 20 can have a certain displacement with respect to the inner housing 18 to play a role of cushioning, so as to prevent the inner housing 18 and other components mounted on the inner housing 18 from being damaged. There is a certain distance between the handle 16 and the outer housing 20, so as to provide a margin for the displacement caused by the collision of the outer housing 20. Specifically, the minimum distance d between the handle 16 and the outer housing 20 is no more than 6 mm. That is, the handle 16 has an upper surface of the handle 16 adjacent to the outer housing 20, the outer housing 20 has a lower surface of the outer housing 20 adjacent to the upper surface of the handle 16, and the space between the upper surface of the handle 16 and the lower surface of the outer housing 20 is not more than 6 mm, so that a human hand is prevented from being erroneously inserted between the handle 16 and the outer housing 20, thereby further improving the safety of the smart mower.

Further, the outer housing 20 has a top, a bottom, and an outer side surface extending from the top to the bottom, and the outer side extends obliquely outward from the top to the bottom. Thus, the outer side surface of the outer housing 20 is formed into an inclined surface inclined downward, so that it is possible to prevent the carrier from accidentally touching the outer housing 20 and damaging the outer housing 20 when conveying the smart mower by using the handle 16.

In addition, the housing 10 is provided with a collision sensing device, specifically, the housing 10 is provided with at least one displacement sensor between the inner housing 18 and the outer housing 20, for monitoring whether a displacement occurs between the inner housing 18 and the outer housing 20. The collision sensing device may be triggered when the outer housing 20 is collided, so as to perform a preset operation such as alarm, stop, etc. Thus, when a foreign object collides with the smart mower, the foreign will first collide with the outer housing 20, and the outer housing 20 will move to trigger the collision sensor to perform a preset operation, thereby further protecting the smart mower.

In the preferred embodiment, two handles 16 are provided, and are respectively disposed on two opposite sides of the housing 10. Specifically, the two handles 16 are both disposed on the inner housing 18 and disposed on opposite sides of the inner housing 18, and the two handles 16 are symmetrically disposed. Of course, the two handles 16 may also be provided on the outer housing 20, and similarly, the two handles 16 may also be provided asymmetrically.

The walking mechanism 14 includes a first and a second road wheels 22, 24 rotatably disposed on a first side of the housing 10, and a third and a fourth road wheels 26, 28 disposed on a second side of the housing 10, with one handle 16 on the first side of the housing 10 and the other handle 16 on the second side of the housing 10. Specifically, the first road wheel 22 and the third road wheel 26 are symmetrically disposed, the second road wheel 24 and the fourth road wheel 28 are symmetrically disposed, and the two handles 16 are symmetrically disposed on the first and the second sides of the housing 10. Further, the first road wheel 22, the second road wheel 24, the third road wheel 26, and the fourth road wheel 28 are all disposed on the inner housing 18.

In the preferred embodiment, one of the handles 16 is positioned between the first road wheel 22 and the second road wheel 24, and the direction in which the one of the handles 16 extends lengthwise is perpendicular to the axis of the first road wheel 22, and the other handle 16 is positioned between the third road wheel 26 and the fourth road wheel 28, and the direction in which the other handle 16 extends lengthwise is also perpendicular to the axis of the first road wheel 22. Specifically, the direction in which the two handles 16 extend lengthwise is parallel to the direction of travel of the smart mower.

### Embodiment 2

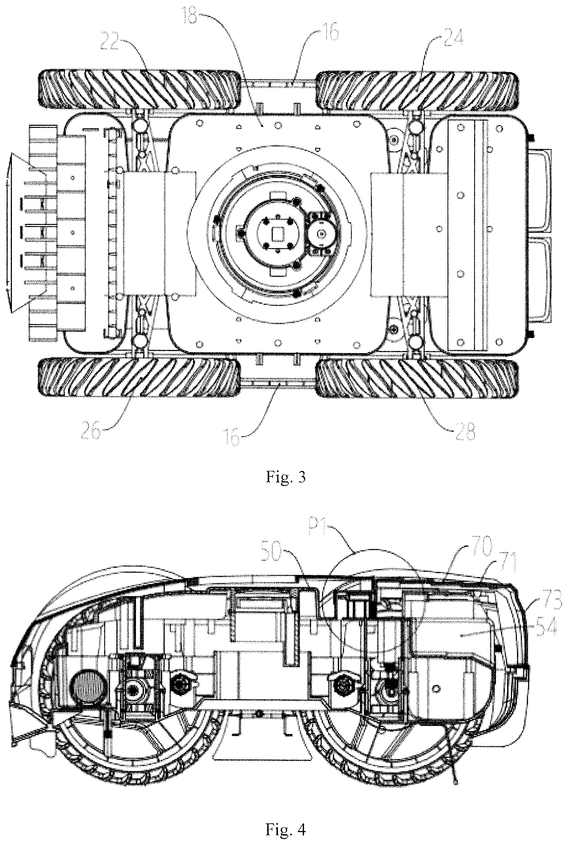

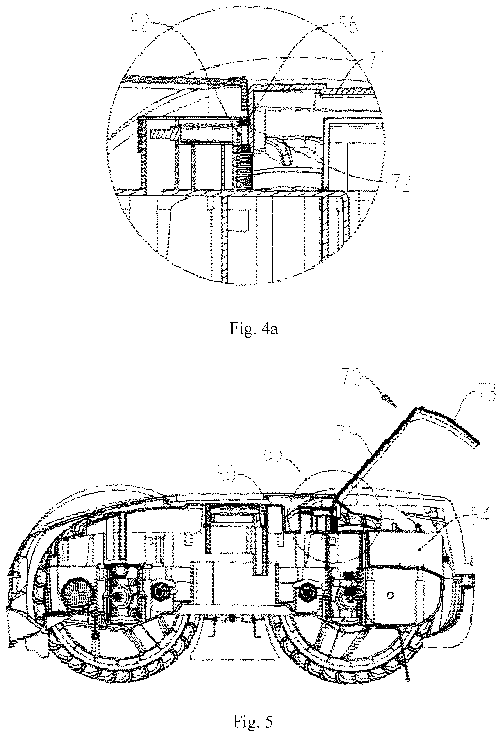

Referring to Figs. 4 to 5, in the present embodiment, the self-walking apparatus will be described by taking a smart mower as an example. The smart mower is used for automatically walking and working on the ground, walking and working energy is provided by using a cordless power supply, such as a battery pack, a solar panel and the like, and the power can also be supplied by connecting to a mains supply with a wired power supply. The smart mower comprises a machine body 50, a cutting mechanism 12 and a walking mechanism 14 which are mounted on the machine body 50, wherein the cutting mechanism 12 is used for trimming a lawn, and the walking mechanism 14 is used for walking and steering, and the cutting mechanism 12 comprises a cutting motor, a transmission shaft connected with the cutting motor and a cutting blade or a grass mowing line matched and connected with the transmission shaft. In addition, the smart mower further comprises a control module for coordinating the cutting mechanism 12 and the walking mechanism 14, and the control module can enable the smart mower to automatically walk on the lawn and mow under the unattended condition. In the description of the present embodiment, unless otherwise specified, directional terms such as front, rear, left, right, up, down, and the like are all referred to the direction in which the smart mower normally travels forward as shown in Fig. 4.

The walking mechanism 14 includes a road wheel group and a walking motor that drives the road wheel group. The road wheel group includes at least one road wheel. The control module can control the starting, stopping, rotating speed and the like of the cutting motor and the walking motor according to a preset program. The smart mower further comprises a battery module for supplying power to the cutting mechanism 12, the walking mechanism 14 and the control module, the battery module comprises a rechargeable battery, the machine body is provided with an accommodating cavity 54, and the accommodating cavity 54 is preferably used for mounting the rechargeable battery. An electric connection socket is disposed on the machine body 50 adjacent to the accommodating cavity 54, and the electric connection socket may include female terminals of various electric connection sockets, such as a charging socket, a data socket, etc.

In the present embodiment, in order to facilitate upgrading of the smart mower, an electric connection socket structure on the machine body 50 is constructed as the data interface 52 for description, the data interface 52 is preferably a USB interface, and the program inside the smart mower is updated through the USB interface, so as to implement upgrading of the smart mower.

A movable cover 70 is mounted on the machine body and comprises an upper cover plate 71 and a rib plate 72 which is fixed at one end of the upper cover plate 71 and extends downwards in a direction forming an angle with the upper cover plate 71 (namely extends towards the direction close to the accommodating cavity), the movable cover 70 can move between two positions relative to the machine body 50, namely an opening position, the upper cover plate opening the accommodating cavity 54 while the rib plate 72 opening the data interface 52, and a closing position, the upper cover plate closing the accommodating cavity 54 while the rib plate 72 closing the data interface 52. That is, with the movement of the movable cover 70, the upper cover 71 opens or closes the accommodating cavity 54 while the rib plate 72 opens or closes the electric connection socket. When the movable cover 70 is opened, the battery module is exposed from the accommodating cavity 54, and the data interface 52 can be exposed for connection; when the movable cover 70 is closed, the movable cover 70 closes the data interface 52 while closing the accommodating cavity 54. As such, the smart mower prevents water from entering the interior of the smart mower from the data interface 52 when in use.

Further, the movable cover 70 further includes a side cover plate 73 which is fixed to the other end of the upper cover plate 71 and extends downwards in a direction forming an angle with the upper cover plate 71 (i.e., extends towards a direction close to the accommodating cavity), the side cover plate 73 and the upper cover plate 71 open or close the accommodating cavity 54 together, the rib plate 72 extends in a direction substantially perpendicular to the upper cover plate 71, the movable cover 70 is located at a closed position, and the data interface 52 and the accommodating cavity 54 are located on two sides of the rib plate 72, respectively. The upper cover plate 71, the rib plate 72, and the side cover plate 73 may be integrally formed, or may be separately manufactured and combined. Along the walking direction of the smart mower, the side cover plate 73 is disposed at the rear side of the machine body 50, facilitating the opening of the movable cover 70. The rib plate 72 is positioned at the front portion of the side cover plate 73, and the rib plate 72 leaves or fits the data interface 52 with the opening and closing of the movable cover 70, so that water is prevented from entering the data interface 52. In addition, in the present embodiment, the movable cover 70 is pivotally disposed relative to the machine body 50, the pivot portion of the movable cover 70 is the connection portion of the upper cover plate 71 and the rib plate 72, the pivot axis of the movable cover 70 is parallel to the rotation axis of the road wheel, and the data interface 52 is adjacent to the pivot portion of the movable cover 70, so that the arrangement of the movable cover 70 is more compact, and the movable cover 70 opens the accommodating cavity 54 by the side cover plate 73 adjacent to the rear portion of the machine body 50, which is also more humanized and better in user experience.

Further, the data interface 52 is provided with waterproof material 56 around the data interface 52, and the waterproof material 56 may be adhered to the data interface 52 or connected by other means, such as being clamped in a groove which is disposed around the data interface and is outside the data interface. The rib plate of the movable cover 70 is abutted against the waterproof material 56 to close the data interface 52, the waterproof material 56 can be constructed as an elastic waterproof material, the rib plate 72 of the movable cover 70 is abutted against the waterproof material, and the waterproof material is elastically deformed due to pressure, so that the waterproof performance between the rib plate 72 and the data interface 52 is better. In the present embodiment, the waterproof material 56 is configured as foam, but may be rubber, silicone, or the like.

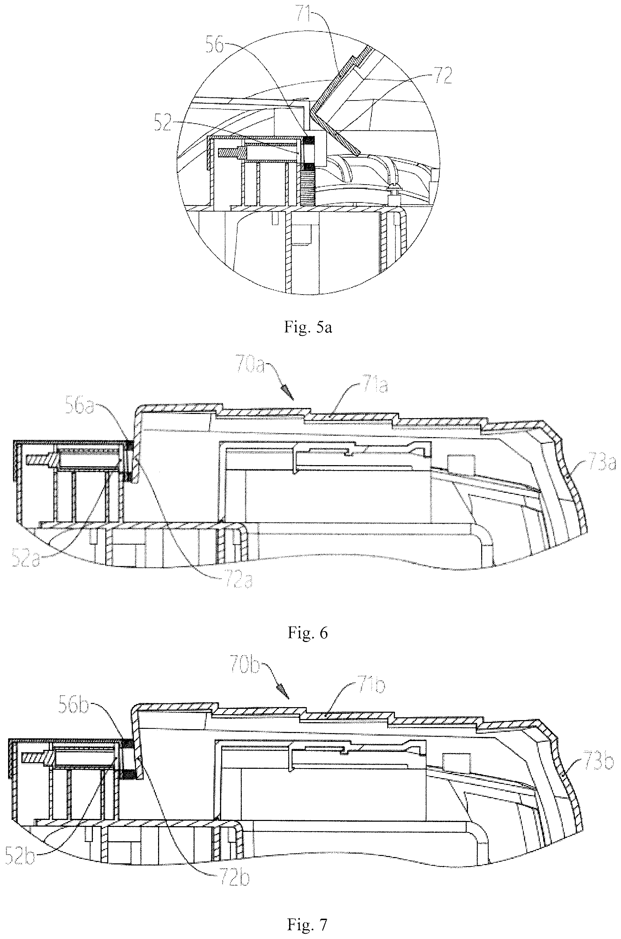

Referring to Fig. 6, another structure of the movable cover of the robot mower is shown, wherein the movable cover 70a also includes an upper cover plate 71a, and a rib plate 72a and a side cover plate 73a which are fixed to the front and the rear sides of the upper cover plate 71a and extend downwards in a direction forming an angle with the upper cover plate, and the structure is different from the aforementioned movable cover in that the rib plate 72a is inclined toward the inside of the movable cover, and preferably, the inclination angle between the rib plate 72a and the direction perpendicular to the upper cover plate 71a is less than 30 degrees, so that the opening or closing of the data interface 52 by the rib plate 72b when the movable cover 70b is opened or closed can be realized.

Referring to Fig. 7, a further structure of the movable cover of the robot mower is shown, wherein the movable cover 70b also includes an upper cover plate 71b, and a rib plate 72b and a side cover plate 73b which are fixed to the front and the rear sides of the upper cover plate 71b and extend downwards in a direction forming an angle with the upper cover plate, and the structure is different from the aforementioned movable cover, the rib plate 72b is inclined toward the outside of the movable cover, and preferably, the inclination angle between the rib plate 72b and the direction perpendicular to the upper cover plate 71b is less than 30 degrees, so that the opening or closing of the data interface 52 by the rib plate 72b when the movable cover 70b is opened or closed can also be realized, and the movable cover 70b is relatively simple to be manufactured by integral molding.

In other embodiments, the self-walking apparatus may be other smart robots, such as an outdoor sweeping robot, a snowplow robot, etc. The movable cover can also be in other movement modes, such as linear movement, linear movement plus rotary movement or curvilinear movement, etc. and the movable cover can also be a cover for opening or closing other parts of the machine body, in addition, the waterproof material can also be adhered on the movable cover, the position of the waterproof material corresponds to the position of the data interface, and when the movable cover is in the closed position, the waterproof material surrounds the data interface for a circle. Furthermore, in the above preferred embodiment, it is opened or closed through operating the side cover plate of the movable cover, the side cover plate is arranged at the rear part of the smart mower, of course, the side cover plate can also be arranged at two sides of the smart mower, that is, the opening orientation of the data interface is perpendicular to the walking direction, the pivot shaft of the movable cover is parallel to the walking direction, or the movable cover only comprises the upper cover plate and the rib plate, and all of the above various embodiments can be applied to the present invention.

It should be understood that although the specification has been described in terms of embodiments, not each embodiment only contains an independent technical solution, and such recitation is merely for the sake of clarity. A person skilled in the art should take the specification as a whole, and the technical solutions in each embodiment can be properly combined to form additional embodiments that may be appreciated by a person skilled in the art.

The above detailed description is only specific to the possible embodiments of the present invention, and is not intended to limit the scope of the present invention, and all equivalent embodiments or modifications that do not depart from the spirit of the present invention are intended to be included within the scope of the present invention.

## Claims

1. A smart mower, including a housing, a cutting mechanism and a walking mechanism, the housing including an inner housing located at the lower portion and an outer housing connected with the inner housing and located at the upper portion, and the cutting mechanism and the walking mechanism being mounted in the inner housing, is **characterized in that** the inner housing is provided with a handle for conveying the smart mower, the handle is disposed adjacent to the outer housing, and the projection of the handle on a horizontal plane is located within the range of the projection of the outer housing on the horizontal plane.

2. The smart mower according to claim 1, **characterized in that** the outer housing and the inner housing are flexibly connected.

3. The smart mower according to claim 2, **characterized in that** the housing is provided with a collision sensing device; when the outer housing is collided, the collision sensing device can be triggered to carry out preset operation.

4. The smart mower according to any one of claims 1 to 3, **characterized in that** the minimum distance between the handle and the outer housing is not more than 6 mm.

5. The smart mower according to claim 1, **characterized in that** the projection of the handle on the horizontal plane is at least partially outside the range of the projection of the inner housing on the horizontal plane.

6. The smart mower according to claim 1, **characterized in that** the handle and the inner housing are integrally formed.

7. The smart mower according to claim 1, **characterized in that** the handle extends in a ring shape, and both ends of the handle are connected to the inner housing.

8. The smart mower according to claim 1, **characterized in that** two handles are provided, and are respectively disposed on two opposite sides of the inner housing.

9. The smart mower according to claim 8, **characterized in that** the walking mechanism includes a first and a second road wheels rotatably disposed on a first side of the housing, and a third and a fourth road wheels disposed on a second side of the housing, with one handle on the first side of the housing and the other handle on the second side of the housing.

10. The smart mower according to claim 9, **characterized in that** one handle is located between the first and the second road wheels, another handle is located between the third and the fourth road wheels, and the directions in which the two handle extend lengthwise are both perpendicular to the axis of the first road wheel.

11. The smart mower according to claim 1, **characterized in that** the smart mower comprises a machine body, the machine body is provided with an accommodating cavity and an electric connection socket close to the accommodating cavity, the machine body is provided with a movable cover, the movable cover comprises an upper cover plate and a rib plate which is fixed at one end of the upper cover plate and extends towards the direction close to the accommodating cavity, the movable cover can pivot around a connecting portion of the upper cover plate and the rib plate, and with the pivoting of the movable cover, the rib plate opens or closes the electric connection socket while the upper cover plate opens or closes the accommodating cavity.
